Europäisches Patentamt

European Patent Office

Office européen des brevets

(19)

(11) Veröffentlichungsnummer: **0 255 647**
**B1**

(12) **EUROPÄISCHE PATENTSCHRIFT**

(45) Veröffentlichungstag der Patentschrift:
28.03.90

(51) Int. Cl.⁴: **G11B 23/04**

(21) Anmeldenummer: **87110512.8**

(22) Anmeldetag: **21.07.87**

(54) **Magnetbandcassette.**

(30) Priorität: **02.08.86  DE 3626286**

(43) Veröffentlichungstag der Anmeldung:
**10.02.88 Patentblatt 88/6**

(45) Bekanntmachung des Hinweises auf die Patenterteilung:
**28.03.90 Patentblatt 90/13**

(84) Benannte Vertragsstaaten:
**BE DE FR GB IT NL**

(56) Entgegenhaltungen:
**EP-A- 0 096 983**
**DE-A- 2 148 594**
**DE-A- 2 216 769**
**DE-A- 2 835 459**
**DE-A- 3 148 352**

(73) Patentinhaber: **Agfa-Gevaert AG,
D-5090 Leverkusen 1(DE)**

(72) Erfinder: **Hölbl, Dieter, Dr., Ottobrunnerstrasse 8,
D-8000 München 83(DE)**

ACTORUM AG

## Beschreibung

Die Erfindung betrifft eine Magnetbandcassette, insbesondere eine Compact-Cassette vom Philips-Typ, welche eine frontseitige Öffnung für den geräteseitigen Tonkopf sowie eine Einrichtung zum Andrücken des Magnetbandes an den Tonkopf besitzt.

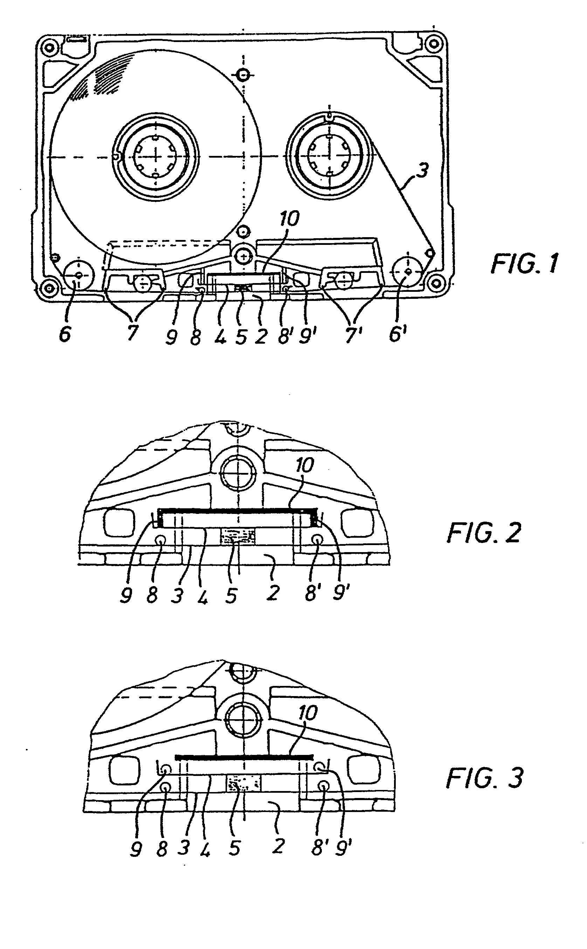

Bei einer Cassette dieses Typs, welche in Figur 1 dargestellt ist, greift zur Tonaufnahme und -wiedergabe der (nicht gezeichnete) Tonkopf durch die Öffnung (2) auf das Magnetband (3) hindurch, welches von der anderen Seite her durch eine Andruckfeder (4), die auf ihrer Vorderseite ein Kissen (5) trägt, an den Tonkopf gedrückt wird. Auf diese Weise wird ein enger Kontakt zwischen Tonkopf und Magnetband bewirkt. Zum Umspulen des Magnetbandes wird der Tonkopf ausgeschwenkt, so daß an sich das Magnetband lediglich über die an der Vorderseite der Cassette vorhandenen Bandführungselemente, nämlich die Röllchen (6, 6') und die Stege (7, 7') sowie die Stifte (8, 8') geführt wird und frei an der mittleren Öffnung vorbeilaufen sollte. Jedoch tritt in vielen Fällen beim Umspulen noch ein unerwünschter Kontakt des Magnetbandes mit dem Andruckkissen auf, wodurch das Umspuldrehmoment erhöht wird und außerdem lästige Geräusche auftreten können. Die Gründe können folgende sein:

- Die Andruckfeder ist bei den meisten Compact-Cassetten beiderseits der frontseitigen mittleren Öffnung zwischen den Bandführungsstiften (8, 8') und den Widerlagern (9, 9') gelagert. Diese Widerlager können von der Kopfkammer ausgehende Stege (Figur 1) oder bei anderen Konstruktionen die umgebogenen Enden des Abschirmbleches sein (Figur 2) oder angespritzte Stifte (Figur 3) sein. Aus spritztechnischen Gründen muß nun der Abstand Bandführungsstifte-Widerlager einen Mindestwert von etwa 0,5 mm besitzen, wodurch die Andruckfeder ein gewisses Lagerspiel hat und auf diese Weise über das Andruckkissen das Magnetband berühren kann.

- Das Andruckkissen, welches im allgemeinen aus einem Filz besteht, muß aufgrund der Cassettenspezifikationen eine bestimmte Dicke besitzen. Wegen Produktionstoleranzen in der Dicke des Filzes und wegen der Tatsache, daß aus dem Filz Haare herausragen können, sind beim Umspulen Berührungsmöglichkeiten mit dem Band vorhanden.

Nach der Lehre der DE-OS 22 16 769 soll das geschilderte Problem dadurch gelöst werden, indem das Magnetband in den Durchgriffsöffnungen für den Tonkopf oder die Tonköpfe durch Federarme im Abstand hinterfaßt ist, die miteinander fest verbunden und mittels eines gemeinsamen Gelenks kippbeweglich im Cassettengehäuse gehalten sind. Bei der so gebildeten Cassette wird durch Einschieben der Tonköpfe in die Durchgriffsöffnungen das Magnetband an die Federarme angelegt und durch diese permanent an den Tonköpfen gehalten, wobei unterschiedliche Eintauchtiefen der Tonköpfe durch Abschwenken der Federarme ausgeglichen werden, während bei fehlenden Wirkverbindungen zwischen Magnetband und Tonköpfen zum Beispiel beim Umspulen das Magnetband reibungsfrei oberhalb der Federarme läuft. Die geschilderte Konstruktion ist relativ kompliziert und daher kostspielig herzustellen, so daß sie für einen Massenartikel wie eine Compact-Cassette als zu aufwendig erscheint.

Aus der DE-OS 28 35 459 ist ein federndes Abschirmelement für Magnetbandcassetten bekannt, das im entspannten Zustand bereits gekrümmt ist, jedoch besteht bei dieser Konstruktion der bereits oben genannte Nachteil des Lagerspiels und außerdem hat das federnde Element eine relativ komplizierte Materialzusammensetzung beziehungsweise einen komlizierten Aufbau.

Der vorliegenden Erfindung lag die Aufgabe zugrunde, eine Magnetband-Cassette des eingangs genannten Typs zu schaffen, welche den genannten Nachteil vermeidet und zudem einfach herzustellen ist.

Die Aufgabe wurde erfindungsgemäß gelöst mit einer Magnetband-Cassette mit den im kennzeichnenden Teil des Anspruchs 1 genannten Merkmalen. Nähere Einzelheiten gehen aus den Unteransprüchen, der Beschreibung und den Zeichnungen hervor.

Die Erfindung wird nun anhand der Zeichnungen näher erläutert und zwar zeigt:

Figur 1 eine Draufsicht auf eine dem Stand der Technik entsprechende Cassette

Figur 2 und 3 vergrößerte Ausschnitte aus Figur 1 mit herkömmlichen Lagerungen der Andruckeinrichtung

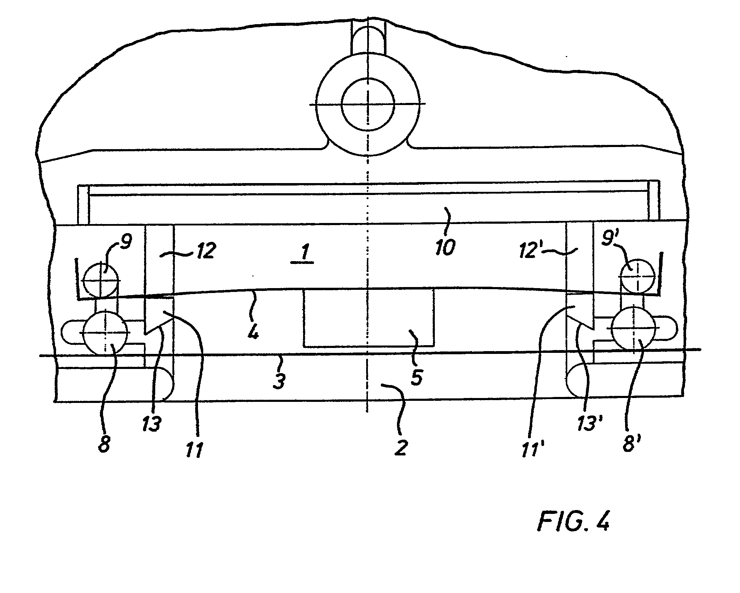

Figur 4 einen vergrößerten Ausschnitt der Vorderseite der Cassette mit einer besonders bevorzugten Ausführung der Erfindung.

Die erfinderische Idee bestand darin, die Andruckfeder (4) so vorzuspannen, daß das oben erwähnte Lagerspiel wegfällt und das Andruckkissen geringfügig in Richtung Cassetteninneres verschoben wird, so daß, wie aus Figur 2 zu erkennen, beim Umspulvorgang keine Bandberührung mit dem Kissen vorkommen kann. Dies wird dadurch erreicht, indem unmittelbar benachbart zu den Bandführungsstiften (8, 8') und den Widerlagern (9, 9') vorzugsweise in Richtung der mittleren Öffnung (2) des vorderen Cassettenteils zwei Pfosten (11, 11') so angebracht sind, daß die Andruckfeder (4) mit dem Kissen (5) zwischen den Pfosten entweder plan liegt oder in Richtung zum Abschirmblech (10) geringfügig durchgebogen ist. In einer bevorzugten Ausführung sind die Pfosten auf den Stegen (12, 12') des Bodenteils (1), welche die Höhenführung der Andruckfeder bewirken, angespritzt. Dadurch ist nur eine unerhebliche Änderung des Spritzwerkzeugs für die Herstellung des Cassettenbodenteils notwendig.

Die Lagerelemente (8, 8'), (9, 9') und (11, 11') können zum leichteren Einsetzen der Andruckfeder von oben eine Einführschräge besitzen, indem sie im oberen Teil abgeschrägt sind.

Bevorzugt verlaufen die vorderen, dem Magnetband zugekehrten Flächen (13, 13') der Pfosten nicht parallel zur Ebene des Magnetbandes, sondern trapezförmig nach dem Cassetteninnenraum hin abgeschrägt, so daß bei eingeschwenktem Tonkopf keine Gefahr besteht, daß das Magnetband an einer Kante der Pfosten scheuert.

Die erfindungsgemäße Lösung hat außer der einfachen Konstruktion noch den zusätzlichen Vorteil, daß bei der Konfektionierung der Compact-Cassette die Andruckfeder, da sie vorgespannt ist, nach dem Einsetzen fest im Bodenteil steckt und dadurch nicht während der mit den einzelnen Fabrikationsschritten verbundenen Transportvorgänge herausfallen kann.

**Patentansprüche**

1. Magnetbandcassette, bestehend aus einem Boden- und einem Deckelteil, einem die Bandwickel enthaltenden Innenraum, einer frontseitigen Öffnung für einen geräteseitigen Tonkopf, einer Andruckeinrichtung, die ein Kissen und eine das Kissen haltende einteilige Blattfeder aufweist, welche beiderseits der Öffnung zwischen Bandführungsstiften und dahinterliegenden Widerlagern steckbar gelagert ist, dadurch gekennzeichnet, daß unmittelbar benachbart den Bandführungsstiften (8, 8') sowie den Widerlagern (9, 9') zwei Pfosten (11, 11') angebracht sind, welche so positioniert sind, daß die Blattfeder (4) mit ihrer Vorderseite an den Pfosten und mit ihrer Rückseite an den Widerlagern anliegt und zwischen den Pfosten entweder plan oder in Richtung Cassetteninneres durchgebogen ist.

2. Magnetbandcassette nach Anspruch 1, dadurch gekennzeichnet, daß die Pfosten (11, 11') auf Stegen (12, 12') des Bodenteils (1), welche die Höhenführung der Blattfeder (4) bewirken, angespritzt sind.

3. Magnetbandcassette nach Anspruch 1 - 2, dadurch gekennzeichnet, daß die zur Öffnung (2) weisenden Flächen (13, 13') der Pfosten keilförmig zur Cassettenmitte weisend abgeschrägt verlaufen.

4. Magnetbandcassette nach Anspruch 1 - 3, dadurch gekennzeichnet, daß die Pfosten (11, 11') und/oder die Widerlager (9, 9') sowie die Bandführungsstifte (8, 8') an ihren oberen Enden zur Einführung der Blattfeder (4) abgeschrägt sind.

**Claims**

1. Magnetic-tape cartridge, consisting of a bottom portion and a top portion, an interior space containing the reel, a front opening for the magnetic head of an appliance, and a pressure device having a cushion and an integral leaf spring holding the cushion, said leaf spring being fixed on either side of the opening between tape guide pins and supports disposed behind them, characterised in that two posts (11, 11') are provided directly adjacent to the tape guide pins (8, 8') and to the supports (9, 9') and are positioned in such a way that the leaf spring (4) rests via its front against the posts and via its rear against the supports and either lies flat between the posts or is flexed in the direction of the interior of the cartridge.

2. Magnetic-tape cartridge according to claim 1, characterised in that the posts (11, 11') are injection moulded on to webs (12, 12') on the bottom portion (1), said webs being adapted for the vertical guiding of the leaf spring (4).

3. Magnetic-tape cartridge according to claims 1 and 2, characterised in that the faces (13, 13') of the posts directed towards the opening (2) slope in a wedge-shaped manner towards the centre of the cartridge.

4. Magnetic-tape cartridge according to claims 1 to 3, characterised in that the posts (11, 11') and/or the supports (9, 9') and the tape guide pins (8, 8') have slopes at their upper ends for the introduction of the leaf spring (4).

**Revendications**

1. Cassette à bande magnétique composée d'un fond et d'un couvercle, un espace intérieur contenant le dispositif d'enroulement de la bande magnétique, une ouverture frontale pour une tête magnétique de l'appareil, un dispositif de pression comportant un coussin et une lame ressort en une pièce qui maintient le coussin et qui se trouve logé des deux côtés de l'ouverture entre les axes de guidage de la bande et les appuis se trouvant derrière ces axes, caractérisée en ce qu'il est prévu à proximité immédiate des axes de guidage de la bande (8, 8') et des appuis (9, 9') deux piliers (11, 11') qui sont positionnés de manière telle que la lame de ressort (4) ait sa face avant contre les piliers et sa face arrière contre les appuis et se trouve plane entre les piliers ou courbée en direction de l'intérieur de la cassette.

2. Cassette à bande magnétique selon la revendication 1, caractérisée en ce que les piliers (11, 11') sont coulés par injection sur des nervures (12, 12') du fond (1) qui assurent le guidage en hauteur de la lame de ressort (4).

3. Cassette à bande magnétique selon les revendications 1–2, caractérisée en ce que les surfaces (13, 13') des piliers en regard de l'ouverture (2) s'étendent en biseau en forme de coin vers le centre de la cassette.

4. Cassette à bande magnétique selon les revendications 1–3, caractérisée en ce que les piliers (11, 11') et/ou les appuis (9, 9') ainsi que les axes de guidage de la bande (8, 8') sont biseautés en leurs extrémités supérieures en vue de l'introduction de la lame de ressort (4).

FIG. 1

FIG. 2

FIG. 3

FIG. 4